## Europäisches Patentamt

## European Patent Office
## Office européen des brevets

(11) Veröffentlichungsnummer: **0 257 520**
**A2**

(12) **EUROPÄISCHE PATENTANMELDUNG**

(21) Anmeldenummer: 87111936.8

(22) Anmeldetag: 18.08.87

(51) Int. Cl.4: **B01D 1/10**

(30) Priorität: 26.08.86 DE 3628994

(43) Veröffentlichungstag der Anmeldung:
02.03.88 Patentblatt 88/09

(84) Benannte Vertragsstaaten:
**BE DE FR GB IT NL**

(71) Anmelder: **BASF Aktiengesellschaft
Carl-Bosch-Strasse 38
D-6700 Ludwigshafen(DE)**

(72) Erfinder: **Bronstert, Klaus, Dr.
Gartenstrasse 26
D-6719 Carlsberg(DE)**
Erfinder: **Mueller,Wolfgang F.,Dr.
Im Biengarten 45
D-6730 Neustadt(DE)**
Erfinder: **Stegmaier, Wolfgang, Dr.
Im Wachtelschlag 6
D-6733 Hassloch(DE)**
Erfinder: **Ladenberger, Volker, Dr.
Verschaffeltstrasse 34
D-6830 Schwetzingen(DE)**
Erfinder: **Springer, Hartmut
Burgunderweg 8
D-6735 Maikammer(DE)**
Erfinder: **Pipper, Gunter
Schlangenthaler Weg 10
D-6702 Bad Duerkheim(DE)**

(54) **Kontinuierliches Verfahren zur Entfernung von gelösten Stoffen aus Polymerlösungen.**

(57) Kontinuierliches Verfahren zur Entfernung von gelösten Stoffen aus Polymerlösungen mittels eines Ringspaltverdampfers, bestehend im wesentlichen aus parallel und vertikal angeordneten Rohren in Form eines Rohrbündels mit jeweils in den Rohren konzentrisch angeordneten Verdrängerkörpern sowie einer Aufgabe-und Verteilungseinrichtung und einer Abzugseinrichtung, wobei die Polymerlösung am Eintritt in den Ringspaltverdampfer auf die Ringspalte aufgegeben und die aufkonzentrierten Polymere in flüssiger Form und die gelösten Stoffe in dampfförmiger Form am Austritt aus dem Ringspaltverdampfer gemeinsam abgezogen werden.

## Kontinuierliches Verfahren zur Entfernung von gelösten Stoffen aus Polymerlösungen

Die Erfindung betrifft ein kontinuierliches Verfahren zur Entfernung von gelösten Stoffen aus Polymerlösungen mittels eines Ringspaltverdampfers, bestehend im wesentlichen aus parallel und vertikal angeordneten Rohren in Form eines Rohrbündels mit jeweils in den Rohren konzentrisch angeordneten Verdrängerkörpern sowie einer Aufgabe-und Verteilungseinrichtung und einer Abzugseinrichtung.

Ein wesentlicher Verfahrensschritt zur Herstellung von Polymeren liegt in der Entfernung von nicht umgesetzten Monomerenanteilen, niedermolekularen Reaktionsprodukten (Oligomere), Zersetzungsprodukten, Hilfsstoffen und vor allem Lösungsmitteln aus den Polymerlösungen nach der Polymerisation, um die aufkonzentrierten Polymere in technisch verwertbarem Zustand darzustellen.

Zur Isolierung der Polymeren aus den Polymerlösungen wird häufig das sogenannte Entgasungsverfahren angewandt, wobei die gelösten Komponenten bei Wärmezufuhr und gegebenenfalls unter Druckabsenkung in den Dampfzustand übergeführt und in diesem von den flüssigen Polymeren abgetrennt werden.

Hierzu sind seit langem verschiedene Verfahren in Gebrauch, wobei die wesentlichen nachstehend aufgeleistet sind. Die Entgasung von niederviskosen, Lösungen, im Viskositätsbereich von ca. $10^{-3}$ bis 0,5 Pas wird durch Entspannungsverdampfung, Verdampfung mittels Fallfilmverdampfer, Röhrenverdampfer oder Schlangenverdampfer sowie mittels Entgasungszentrifugen und Destilliereinrichtungen durchgeführt. Die Entgasung von mittelviskosen Lösungen im Bereich von ca. 0,1 bis 100 Pas. wird im wesentlichen mittels Röhrenverdampfer, Dünnschichtverdampfer mit Rotoren, Rührbehälter, Schaufel-oder Paddelverdampfer und Ringscheibenapparate durchgeführt. Letztendlich sind für Lösungen im hochviskosen Bereich von ca. 1 bis 50 000 Pas folgende Verfahren bzw. folgender Einsatz von Apparaturen bekannt: Diskontinuierliche Kneter, Schneckenmaschinen und Kalander.

Von den genannten Verfahren wird im nieder-und mittelviskosen Bereich häufig die offene Verdampfung im Röhrenverdampfer angewandt, da diese auf wirtschaftliche Weise mit einfachen Apparaten - ohne mechanisch bewegte Teile - durchgeführt werden kann. Diese Röhrenverdampfer bestehen wie herkömmliche Rohrbündelverdampfer aus parallel angeordneten Einzelrohren, welche sowohl von der zu entgasenden Polymerlösung als auch von dem zu entbindenden Lösungsmitteldampf von oben nach unten durchströmt werden. Zur besseren Gleichverteilung der Polymerlösung auf die einzelnen Rohre und um insbesondere einen dünnen Film auf der Rohrwand zu erzeugen, sind diese Röhrenverdampfer mit Drossel-und Verteileinrichtungen in den Rohreinläufen versehen.

In der russischen Patentschrift 377 162 ist ein Röhrenverdampfer beschrieben, bei dem bei der Entgasung von Polymerlösungen zur Erzeugung eines dünnen Films auf der Rohrwand, in den Rohren koaxiale Röhren angeordnet sind. Aufgrund der Konstruktion dieses Röhrenverdampfers kann der entbundene Lösungsmitteldampf in den Ringspalten nur nach oben strömen und über den Dampfabgangsstutzen in der Verteilungskammer 3 aus dem Röhrenverdampfer entweichen, während das aufkonzentrierte Polymer durch Schwerkraft nach unten abfließt und unten aus dem Röhrenverdampfer abgezogen wird.

Beim Einsatz dieses Röhrenverdampfers erwies sich als nachteilig, daß die Polymerlösung nur soweit aufkonzentriert werden kann, wie dieselbe unter Wirkung der Schwerkraft in den Ringspalten noch frei abläuft.

Es stellt sich daher die Aufgabe, die nach einer Polymerisation vorliegende Polymerlösung bei - schonenden Bedingungen kostengünstig in nur einer Verfahrensstufe zu entgasen, wobei bei zunehmender Viskosität während der Entgasung ein Abfließen der Polymerlösung über die gesamte Länge des Röhrenverdampfers gewährleistet ist.

Diese Aufgabe wird erfindungsgemäß dadurch gelöst, daß die Polymerlösung am Eintritt in den Ringspaltverdampfer auf die Ringspalte aufgegeben und die aufkonzentrierten Polymere in flüssiger Form und die gelösten Stoffe in dampfförmiger Form am Austritt aus dem Ringspaltverdampfer gemeinsam abgezogen werden.

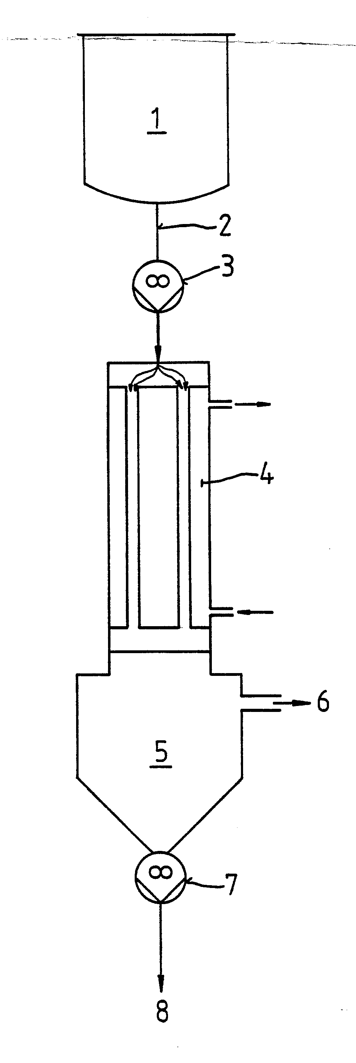

Das erfingungsgemäße Verfahren ist in der Zeichnung dargestellt und wird im folgenden näher erläutert.

Aus dem Vorratsbehälter 1 wird die Polymerlösung 2 mittels eines Förderorgans 3, bevorzugt eine Zahnradpumpe, dem Ringspaltverdampfer 4 zugeführt. Ist die Temperatur der Polymerlösung erheblich niedriger als die notwendige Verdampfungstemperatur im Ringspaltverdampfer, ist es sinnvoll, die Polymerlösung in einem dem Ringspaltverdampfer vorgeschalteten Wärmetauscher vorzuwärmen. Im Ringspaltverdampfer durchläuft die von oben eingeleitete Polymerlösung zunächst eine Zone, wo sie bis zur einsetzenden Verdampfung vorgewärmt wird. Dieser Zone - schließt sich der Verdampfungsbereich an, in welcher die gelösten Stoffe in den Dampfzustand übergeführt werden. Durch die Strömungskräfte der verdampften Anteile wird die an Viskosität zunehmende Polymerlösung zusätzlich zur wirkenden Gewichtskraft durch den Ringspalt zur Abzugseinrichtung hinbewegt. Im nachgeschalteten Entgasungsbehälter 5 werden die entgasten Anteile als Dampf 6 abgezogen. Mittels eines Förderorgans 7, wie einer Zahnrad-oder Schneckenpumpe, wird die teil-oder vollentgaste Polymerlösung 8 oder -- schmelze, je nach Aufgabenstellung, entweder direkt als Polymerstrang ausgetragen oder einer weiteren Entgasungseinrichtung zugeführt.

Je nach den zu entgasenden Stoffen und dem entsprechenden Polymeren sind Drücke und Temperaturen im Entgasungsbehälter einzustellen.

Es versteht sich von selbst, daß der in der Zeichnung als Einzelrohr dargestellte Ringspaltverdampfer als Rohrbündel mit einer Vielzahl von parallel angeordneten Ringspaltverdampferrohren ausgebildet ist.

Der für die gleichmäßige Produktverteilung auf diese parallel angeordnete Ringspaltverdampferrohre notwendige Gesamtdruckverlust, welcher größer sein soll als die Druckverlustschwankungen bedingt durch die leicht pulsierende Gas-Flüssigströmung in der Verdampfungszone, wird üblicherweise durch entsprechende Dimensionierung des Ringspaltes erzeugt. Diese Dimensionierung muß an die Viskosität der einzuspeisenden Lösung, des Anteils der zu entgasenden Stoffe und der Viskositätszunahme bei der Entgasung angepäßt werden. In Einzelfällen und für eine günstigere Betriebsweise beim An-und Abfahren sowie für Teillastbetrieb kann jedoch der Einsatz von Düsenkörpern vorteilhaft sein, welche im Einlauf der Verdampferrohre angeordnet werden und die Aufgabe haben, einen gleichmäßigen Vordruck für eine Gleichverteilung auf die einzelnen Verdampferrohre zu erzeugen.

Der Ringspaltverdampfer ist senkrecht anzuordnen, wobei die Durchströmung vorzugsweise von oben nach unten erfolgt; die umgekehrte Richtung ist jedoch in Einzelfällen auch möglich. Wie bei bekannten Verdampfern erfolgt die Beheizung der Verdampferrohre durch flüssige ´ oder dampfförmige Wärmeträgermedien, wobei im Falle von flüssigen Wärmeträgermedien, wie bekannt, durch Einbau von geeigneten Einrichtungen für eine möglichst gleichmäßige Temperaturführung gesorgt werden muß.

Dem Ringspaltverdampfer wird zur Trennung des teil-oder vollentgasten Polymeren von den verdampften Anteilen ein Entgasungsbehälter bekannter Konstruktion nachgeschaltet. Aus diesem wird das Polymere mittels Förderorganen, wie Zahnradpumpen oder Schneckenförderer, entweder direkt ausgetragen oder zur eventuell notwendigen Restentgasung zum Beispiel einem Entgasungsextruder oder einer Strangentgasungseinheit zugeführt.

Nach dem neuen Verfahren können prinzipiell alle Polymerlösungen unabhängig von der Art des Polymeren und des Lösungsmittels entgast werden.

Bei den Polymeren kann es sich um Homopolymerisate, Blockpolymerisate, Copolymerisate beliebigen Aufbaus oder auch um Polymermischungen und Polymerblends handeln.

Beispiele für solche Polymeren sind Polystyrol, Poly-alpha-Methylstyrol, schlagfestes Polystyrol, Styrol-Butadien-Blockpolymere, Styrol-Isopren-Blockpolymere, statistische Styrol-Butadien-Copolymere, statistische Styrol-Isopren-Copolymere, hydrierte Styrol-Dien-Polymere, Polybutadiene, Polyisoprene, Styrolcopolymere (ABS, SAN u.a. Copolymere), Polyalkylmethacrylate (z.B. PMMA), Polyamide, Polyether, Polyphenylenether, Polyacrylsäure, Polyarylsulfone (wie Polysulfon und Polyethersulfon), Polyolefine (wie Polyethylene, Polypropylene, Ethylen-Propylen-Terpolymere), Polyacetale, Polyvinylalkohole, Polyvinylchlorid. Das Molekulargewicht der Polymeren liegt zwischen 5 000 und 5 Millionen, vorzugsweise zwischen 10 000 und 1 Million, insbesondere 10 000 und 250 000.

Bei den abgetrennten Stoffen kann es sich um reine Lösungsmittel, Lösungsmittelgemische, nicht umgesetzte Monomere, Oligomere, Zersetzungsprodukte und Hilfsstoffe handeln.

Die Lösungsmitel können aliphatische (z.B. Pentan, Hexan, Heptan u.a.), cycloaliphatische (z.B. Cyclopentan, Cyclohexan, Methylcyclohexan) oder aromatische Kohlenwasserstoffe (z.B. Benzol, Toluol, Xyol, Ethylbenzol u.a.) sowie Ether (Dimethylether, Tetrahydrofuran), Ester, Ketone, Alkohole, organische Säuren (z.B. Essigsäure oder Ameisensäure) Amine oder Wasser sowie beliebige Mischungen der genannten Lösungsmittel sein.

## Ansprüche

Kontinuierliches Verfahren zur Entfernung von gelösten Stoffen aus Polymerlösungen mittels eines Ringspaltverdampfers, bestehen im wesentlichen aus parallel und vertikal angeordneten Rohren in Form eines Rohrbündels mit jeweils in den Rohren konzentrisch angeordneten Verdrängerkörpern, sowie einer Aufgabe-und Verteilungseinrichtung und einer Abzugseinrichtung, dadurch gekennzeichnet, daß die Polymerlösung am Eintritt in den Ringspaltverdampfer auf die Ringspalte aufgegeben und die aufkonzentrierten Polymere in flüssiger Form und die gelösten Stoffe in dampfförmiger Form am Austritt aus dem Ringspaltverdampfer gemeinsam abgezogen werden.

440/86